# FASCICULE DE BREVET EUROPEEN

(11) **EP 3 360 407 B1**
(45) Date de publication et mention de la délivrance du brevet: **06.11.2019**
(21) Numéro de dépôt: 18154583.1
(22) Date de dépôt: 01.02.2018
(51) Int. Cl.: A01F 12/44

(54) **GRILLE POUR NETTOYEUR DE GRAINS**
GITTER FÜR SAATGUTREINIGER
SCREEN FOR GRAIN CLEANER

(30) Priorité: 08.02.2017 FR 1751026
(43) Date de publication de la demande: 15.08.2018
(73) Titulaire: Optomachines, 63200 Riom (FR)
(72) Inventeur: PARADIS, François, 63200 RIOM (FR)
(74) Mandataire: Cabinet Laurent & Charras

(56) Documents cités:
- DE-B- 1 299 923
- DE-C- 280 572
- DE-C- 656 776
- US-A- 1 381 718
- US-A- 1 928 216

## Description

### DOMAINE TECHNIQUE

La présente invention concerne le domaine technique du nettoyage de grains, tels que des graines de céréales, des semences, des petits pois, lentilles ou des légumes divers, ou plus généralement de matériaux granulaires.

Par nettoyage, on entend le fait de trier et séparer les grains que l'on qualifie de bons par rapport à d'autres produits qui sont soit des grains cassés, soit des grains hors calibre, soit des déchets, soit des graines ou corps étrangers.

### ETAT ANTERIEUR DE LA TECHNIQUE

Il est connu de l'état de la technique une première technique de nettoyage de grains, mettant en œuvre une table densimétrique qui sélectionne les grains en fonction de leur densité.

D'après le principe du lit fluidisé, la table densimétrique permet de diviser les grains en couches horizontales de poids différents. Un système transporteur, combiné à l'inclinaison du plateau de la table, permet de déplacer les grains légers de la couche supérieure vers le bas de la table, tandis que les grains plus lourds des couches inférieures remontent vers le bord surélevé de la table.

Une autre technique consiste à utiliser des colonnes pneumatiques qui permettent de séparer les grains aussi en fonction de leur densité, et qui permettent d'évacuer tout ce qui est paille et déchets légers.

Une autre technique, connue sous le nom de calibrage, criblage, tamisage ou émottage consiste à faire passer les grains sur des jeux d'au moins deux grilles, dont une première grille supérieure comprenant des trous suffisamment gros pour laisser passer le bon grain et retenir le grain plus gros ou les déchets plus gros, et une deuxième grille inférieure à maille beaucoup plus fine pour que le bon grain ne puisse pas passer à travers mais que les petits grains, les grains cassés et les espèces étrangères puissent traverser et être ainsi séparés.

Cette technologie de séparation par grilles calibrées est utilisée aussi bien en laboratoire que dans des procédés industriels, et sont donc intégrées dans machines appelées nettoyeurs.

Selon cette technique, les grains sont en pratique acheminés et distribués par gravité sur les grilles de nettoyage, par l'intermédiaire d'un vibrateur ou d'un système de distribution progressif. Les grains peuvent chuter au travers d'un courant d'air qui sépare les déchets légers, tels que la paille par exemple. Les grains tombent sur la première grille qu'ils peuvent traverser.

Pour améliorer le passage des grains à travers cette première grille, le nettoyeur comprend des moyens pour faire osciller ou vibrer la grille horizontalement et dans son sens longitudinal, avec une amplitude de l'ordre de 10 à 15 mm. La grille peut être horizontale ou inclinée pour faire avancer le grain, c'est-à-dire le répartir sur une plus grande longueur de la grille. Les grains tombent au niveau d'une première extrémité de la grille et le mouvement de celle-ci propage les grains vers l'autre extrémité. Seuls les gros déchets vont jusqu'au bout, et tous les grains de taille normale doivent avoir traversé la grille avant d'arriver en bout de grille.

Pour des grains globalement circulaires, par exemple le maïs, la grille comprend des trous ronds, et pour le blé, l'orge, ou d'autres graines longues, la grille comprend des trous oblongs.
L'inconvénient de cette solution réside dans le débit de passage des grains au travers des grilles, qui peut largement être amélioré, notamment en ce qui concerne les grains oblongs dont l'orientation doit correspondre à l'orientation du trou oblong pour pouvoir passer au travers.
Pour améliorer le débit de passage de grains, il est connu d'allonger la grille et d'augmenter la vibration. Malgré tout, le débit de passage est tenu par des effets statistiques qui font qu'il y a de bons grains qui parcourent toute la longueur de la grille sans pouvoir passer au travers d'un trou.
Les documents DE 12 99 923, US 1,381,718, US 1,928,216, DE 280572, et DE 656 776 décrivent des grilles pour nettoyeur conformes au préambule de la revendication 1.

### EXPOSE DE L'INVENTION

L'un des buts de l'invention est de fournir une grille pour nettoyeur de grains permettant un débit de passage élevé, augmentant ainsi le rendement du nettoyeur.

A cet effet, il a été mis au point une grille pour nettoyeur de grains, se présentant sous la forme d'une plaque perforée d'une pluralité d'orifices calibrés pour le passage d'un certain calibre de grains. Généralement, les orifices calibrés sont régulièrement répartis sur la surface de la grille et forment une sorte de quadrillage.

Selon l'invention, la grille comprend des moyens de guidage et d'orientation des grains le long de la grille, coordonnés aux orifices calibrés.

De cette manière, le débit de passage des grains au travers de la grille est augmenté car les grains sont guidés et orientés dans l'axe des orifices. Lorsque les grains et les orifices calibrés sont oblongs, les moyens de guidage et d'orientation permettent d'orienter les grains selon l'orientation des orifices calibrés. En d'autres termes, les grains sont alignés avec les orifices calibrés. Les grains guidés et orientés dans cette position vont donc forcément passer au-dessus d'un orifice, en étant bien orientés, et rester sur la grille si le grain est hors calibre, ou forcément passer au travers s'il est de dimensions adéquates. Les risques qu'un grain ne passe pas au travers d'un orifice de plus grandes dimensions que ledit grain sont très nettement diminués, voire supprimés. Le rendement d'un nettoyeur intégrant une telle grille est optimal et nettement augmenté par rapport à une grille conventionnelle.

Un autre avantage de la présente invention réside dans le fait qu'étant donné que les grilles permettent un débit de passage des grains élevés, lesdites grilles peuvent être plus courtes, le nettoyeur peut mettre en œuvre des éléments vibrants plus petits, plus légers, et donc de gagner en encombrement, en puissance embarquée et en consommation d'énergie. La grille est oscillée plus faiblement, ce qui permet de moins secouer le grain puisque le grain traverse la grille avec moins de vibrations, ce qui diminue les risques d'endommagement dudit grain.

Selon l'invention, les moyens de guidage et d'orientation se présentent sous la forme de rainures longitudinales, ménagées le long de la grille, c'est-à-dire sur toute sa longueur. Dans cette configuration, les orifices calibrés sont ménagés le long et dans le fond desdites rainures.

De préférence, chaque rainure comprend deux pans inclinés de manière à présenter une section transversale en forme de V ou trapézoïdale. Selon un autre exemple de réalisation, les pans inclinés de la forme en V ou trapézoïdale sont courbés.

Avantageusement, et pour guider de manière optimale toute sorte de grains, l'angle formé entre les pans inclinés de chaque rainure est compris entre 90° et 140°. Un angle plus fermé aura tendance à plus coincer les gros grains entre ses faces, tandis qu'un angle trop ouvert guidera moins les graines.

Selon une forme de réalisation particulière, la grille est constituée de deux plaques superposées, dont une première plaque en métal perforée avec les orifices calibrés, et une deuxième plaque, par exemple en polymère notamment en PVC, comprenant une surface plane en contact avec la première plaque et une surface opposée avec une section transversale ayant un profil en dent de scie pour former les moyens de guidage et d'orientation des grains. La deuxième plaque est ajourée pour laisser apparaître, le long et dans le fond des rainures en V du profil en dent de scie, les orifices calibrés de la première plaque.

Ainsi, le relief de la deuxième plaque peut être réalisé d'une manière simple par usinage d'une plaque en PVC. La première plaque en métal, réalisée par exemple en acier inoxydable, est très résistante à l'abrasion des grains de sorte que les orifices resteront toujours calibrés à la bonne dimension.

Selon une autre forme de réalisation, la grille peut soit être en relief massif, soit être constituée d'une plaque en métal pliée pour définir une section transversale ayant un profil en dent de scie, et perforée de la pluralité d'orifices calibrés le long et dans le fond des rainures en V du profil en dent de scie.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées dans lesquelles :
- la figure 1 est une représentation schématique illustrant, vue de dessus, la grille selon l'invention, dans laquelle on aperçoit uniquement les moyens de guidage et d'orientation des grains le long de la grille, qui se présentent sous la forme d'une plaque en PVC ;
- la figure 2 est une représentation schématique illustrant la grille en coupe transversale selon la ligne A-A apparaissant sur la figure 1 ;
- la figure 3 est une représentation schématique illustrant en détail la portion des moyens de guidage et d'orientation des grains apparaissant encerclée sur la figure 1.

### EXPOSE DETAILLE DE L'INVENTION

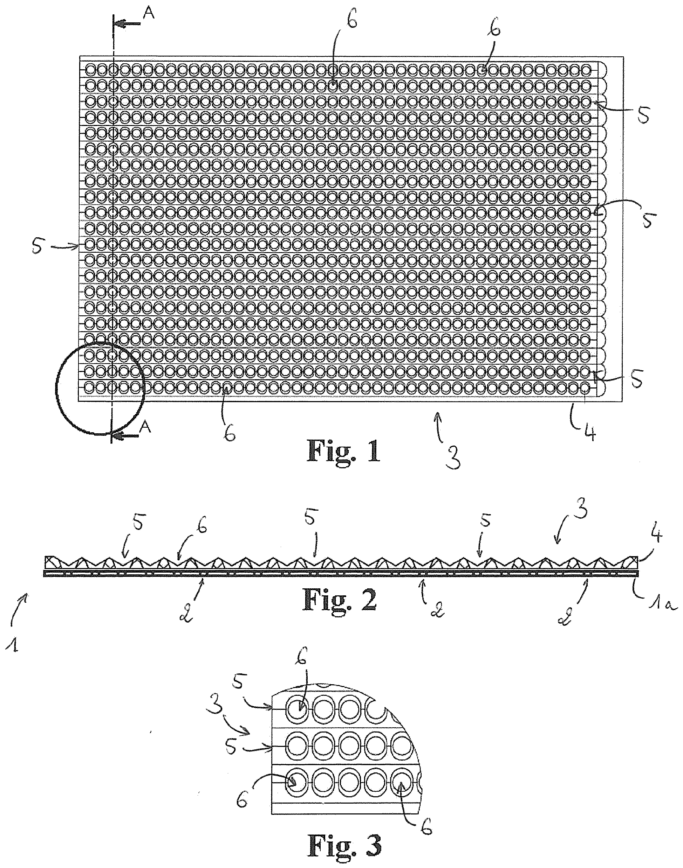

En référence aux figures 1 à 3, l'invention concerne une grille (1) pour nettoyeur de grains.

La grille (1) se présente sous la forme d'une plaque en métal (1a), par exemple en acier inoxydable, perforée d'une pluralité d'orifices (2) calibrés formant un quadrillage sur la surface de la grille (1). La grille (1) est destinée à être utilisée en jeux de plusieurs grilles comportant des orifices (2) calibrés de plus en plus petits, à la manière d'un tamis pour nettoyer des grains, c'est-à-dire pour séparer les grains de bon calibre des grains cassés, des grains hors calibre, ou des déchets. La grille (1) permet le nettoyage de tout type de grains, tels que des graines, des semences, des petits pois, lentilles ou des légumes divers, ou plus généralement des matériaux granulaires.

Le jeu de grilles est intégré dans un nettoyeur de grains, bien connu de l'état de la technique, et est, par exemple, monté avec une certaine inclinaison et avec capacité de translation, horizontale ou proche de l'horizontale. En d'autres termes, les grilles vibrent ou oscillent selon une faible amplitude, de l'ordre de 10 à 15 mm, pour faire avancer les grains qui sont distribués par gravité à l'extrémité la plus haute de la première grille.

Les grilles (1) sont préférablement inclinées de 10° vers le bas dans le sens d'avance des grains. La direction de vibration peut être horizontale, ou plus avantageusement inclinée, typiquement de 35° vers le haut dans le sens d'avance des grains, permettant ainsi de mieux dégager les gros grains.

Afin d'améliorer le rendement de passage des bons grains, c'est-à-dire des grains de bons calibres, au travers des orifices (2) calibrés de la grille (1), celle-ci comprend des moyens (3) de guidage et d'orientation des grains le long de la grille (1), coordonnés aux orifices (2) calibrés, pour guider et orienter les grains au-dessus et dans l'axe desdits orifices (2).

Selon une forme de réalisation particulière, les moyens (3) de guidage et d'orientation se présentent sous la forme d'une deuxième plaque (4), par exemple en PVC, superposée et de préférence collée sur la première plaque en métal (1a). La surface de la plaque (4) en PVC qui est en contact avec la plaque en métal (1a) est plane, tandis que la surface opposée de la plaque (4) en PVC comprend une section transversale avec un profil en dent de scie pour former des rainures (5) longitudinales de guidage et d'orientation des grains. La plaque (4) en PVC est ajourée, notamment par une pluralité de lumières (6) circulaires ou oblongues, et de préférence coniques à 45° (à +/-15°) d'angle au sommet, pour laisser apparaître, le long et dans le fond des rainures (5) en V du profil en dent de scie, les orifices (2) calibrés de la première plaque en métal (1a).

De cette manière, lorsque les grains avancent sur la grille (1), ils sont guidés et alignés par les rainures (5) pour forcer leur passage au-dessus des orifices (2) calibrés. Les rainures (5) sont ménagées le long de la grille (1), c'est-à-dire sur toute sa longueur. Ce faisant, si un grain possède une dimension inférieure à celle de l'orifice calibré, ledit grain passera automatiquement au travers dudit orifice (2). Les risques que le grain passe au-dessus de l'orifice (2) sans y passer au travers sont très limités, voire nuls. Le même résultat est obtenu lorsque les grains et les orifices (2) calibrés sont oblongs. En effet, les pans inclinés de la forme en V des rainures (5) permettent de guider et surtout d'orienter les grains selon l'axe des orifices (2) oblongs qui se trouvent ménagés au fond desdites rainures (5).

L'angle formé entre les pans inclinés de chaque rainure (5) est avantageusement compris entre 90° et 140°. Cette valeur d'angle permet un bon guidage tout en ne freinant pas l'avance des grains le long de la grille (1). Bien entendu, et sans sortir du cadre de l'invention, le profil en V des rainures (5) peut aussi être arrondi, trapézoïdal, ou équivalent.

Selon une forme de réalisation non illustrée, et sans sortir du cadre de l'invention, la grille (1) peut être constituée d'une seule plaque, par exemple en métal, massive, ou bien fine et pliée en forme d'accordéon pour définir une section transversale ayant un profil en dent de scie, et perforée de la pluralité d'orifices (2) calibrés le long et dans le fond des rainures (5) en V du profil en dent de scie.

## Revendications

1. Grille (1) pour nettoyeur de grains, ladite grille (1) est destinée à recevoir des grains et à osciller dans un sens longitudinal pour faire avancer les grains le long de la grille, ladite grille (1) se présente sous la forme d'une plaque perforée d'une pluralité d'orifices (2) calibrés pour le passage d'un calibre de grains, ***caractérisée* en ce qu'**elle comprend des moyens (3) de guidage et d'orientation des grains le long de la grille (1) se présentant sous la forme de rainures (5) longitudinales ménagées le long de la grille (1) et coordonnées aux orifices (2) calibrés, lesdits orifices étant ménagés le long et dans le fond desdites rainures (5).

2. Grille (1) selon la revendication 1, ***caractérisée* en ce que** chaque rainure (5) comprend deux pans inclinés de manière à présenter une section transversale en forme de V ou trapézoïdale.

3. Grille (1) selon la revendication 2, ***caractérisée* en ce que** l'angle formé entre les pans inclinés de chaque rainure (5) est compris entre 90° et 140°

4. Grille (1) selon la revendication 2, ***caractérisée* en ce que** les pans inclinés sont courbés.

5. Grille (1) selon l'une des revendications précédentes, ***caractérisée* en ce que** qu'elle est constituée de deux plaques superposées, dont une première plaque (1a) perforée avec les orifices (2) calibrés, et une deuxième plaque (4) comprenant une surface plane en contact avec la première plaque (1a) et une surface opposée avec une section transversale ayant un profil en dent de scie pour former les moyens (3) de guidage et d'orientation des grains, ladite deuxième plaque (4) étant ajourée pour laisser apparaître, le long et dans le fond des rainures (5) en V du profil en dent de scie, les orifices (2) calibrés de la première plaque (1a).

6. Grille (1) selon la revendication 5, ***caractérisée* en ce que** la première plaque (1a) est en métal et la deuxième plaque (4) est en matériau polymère.

7. Grille (1) selon la revendication 6, ***caractérisée* en ce que** la première plaque (1a) est en acier inoxydable et la deuxième plaque (4) est en polychlorure de vinyle

8. Grille (1) selon l'une des revendications 1 à 4, ***caractérisée* en ce qu'**elle est constituée d'une plaque en métal pliée pour définir une section transversale ayant un profil en dent de scie, et perforée de la pluralité d'orifices (2) calibrés le long et dans le fond des rainures (5) en V du profil en dent de scie.

## Patentansprüche

1. Sieb (1) zur Reinigung von Korn, dieses Sieb (1) dient zur Aufnahme des Korns, das dann in Längsrichtung in Schwingung versetzt wird, damit sich das Getreide über die Länge des Siebs hinweg bewegt, dieses Sieb (1) hat die Form einer perforierten Platte mit zahlreichen kalibrierten Öffnungen (2), zum Durchgang einer Korngröße, ***dadurch gekennzeichnet, dass*** sie Mittel (3) zur Führung und Ausrichtung des Getreides entlang des Siebes (1) umfasst, die die Form von Längsrillen (5) haben, die entlang des Siebs (1) angeordnet und mit den kalibrierten Öffnungen (2) koordiniert sind, diese Öffnungen sind entlang und am Boden dieser Rillen (5) angeordnet.

2. Sieb (1) gemäß Anspruch 1, ***dadurch gekennzeichnet, dass*** jede Rille (5) zwei Schrägen aufweist, die so geneigt sind, dass sie einen V- oder trapezförmigen Querschnitt bilden.

3. Sieb (1) gemäß Anspruch 2, ***dadurch gekennzeichnet, dass*** der Winkel zwischen den Schrägen jeder Rille (5) zwischen 90° und 140° liegt.

4. Sieb (1) gemäß Anspruch 2, ***dadurch gekennzeichnet, dass*** die Schrägen gekrümmt sind.

5. Sieb (1) gemäß einem der vorangehenden Ansprüche, ***dadurch gekennzeichnet, dass*** es aus zwei übereinander angeordneten Platten besteht, die erste Platte (1a) ist mit zahlreichen kalibrierten Öffnungen (2) perforiert und die zweite Platte (4) enthält eine flache Oberfläche, die Kontakt mit der ersten Platte (1a) hat sowie eine entgegengesetzte Fläche, mit einem Querschnitt mit einem Profil in Sägezahnform, um die Mittel (3) zur Führung und Ausrichtung des Getreides zu bilden, diese zweite Platte (4) ist durchbrochen und durch sie hindurch sind entlang und auf dem Boden der V-förmigen Rillen (5) des sägezahnförmigen Profils die kalibrierten Öffnungen (2) der ersten Platte (1a) zu sehen.

6. Sieb (1) gemäß Anspruch 5, ***dadurch gekennzeichnet, dass*** die erste Platte (1a) aus Metall und die zweite Platte (4) aus einem Polymer besteht.

7. Sieb (1) gemäß Anspruch 6, ***dadurch gekennzeichnet, dass*** die erste Platte (1a) aus Edelstahl und die zweite Platte (4) aus einem Polyvinylchlorid besteht.

8. Sieb (1) gemäß einem der Ansprüche 1-4, ***dadurch gekennzeichnet, dass*** es aus einer Metallplatte besteht, die so gebogen ist, dass sie einen Querschnitt mit einem sägezahnförmigen Profil definiert und von den zahlreichen kalibrierten Öffnungen (2) entlang und auf dem Boden der V-förmigen Rillen (5) des sägezahnförmigen Profils perforiert wird.

## Claims

1. Grid (1) for grain cleaner, the said grid (1) is intended to receive grains and to oscillate in a longitudinal direction to advance the grains along the grid, the said grid (1) is in the form of a perforated plate with a plurality of calibrated holes (2) for the passage of a grain size, ***characterized* in that** it comprises means (3) for guiding and orienting the grains along the grid (1) in the form of longitudinal grooves (5) arranged along the grid (1) and coordinated with the calibrated holes (2), said holes being arranged along and at the bottom of said grooves (5).

2. Grid (1) according to the claim 1, ***characterized* in that** each groove (5) comprises two inclined sides so as to have a V-shaped or trapezoidal cross-section.

3. Grid (1) according to claim 2, ***characterized* in that** the angle between the inclined surfaces of each groove (5) is between 90° and 140°

4. Grid (1) according to claim 2, ***characterized* in that** the inclined sides are curved.

5. Grid (1) according to one of the previous claims, ***characterized* in that** it consists of two superposed plates, including a first plate (1a) perforated with the calibrated holes (2), and a second plate (4) comprising a flat surface in contact with the first plate (1a) and an opposite surface with a cross-section having a sawtooth profile to form the means (3) for guiding and orienting the grains, said second plate (4) being open to reveal, along and in the bottom of the V-grooves (5) of the sawtooth profile, the holes (2) of the first plate (1a).

6. Grid (1) according to claim 5, ***characterized* in that** the first plate (1a) is made of metal and the second plate (4) is made of polymeric material.

7. Grid (1) according to claim 6, ***characterized* in that** the first plate (1a) is made of stainless steel and the second plate (4) is made of polyvinyl chloride.

8. Grid (1) according to one of claims 1 to 4, ***characterized* in that** it is constituted of a folded metal plate to define a cross-section having a sawtooth profile, and perforated with the plurality of holes (2) calibrated along and in the bottom of the V-grooves (5) of the sawtooth profile.
